(19) Europäisches Patentamt / European Patent Office / Office européen des brevets

(11) **EP 4 480 770 A1**

(12) **EUROPÄISCHE PATENTANMELDUNG**

(43) Veröffentlichungstag:
**25.12.2024 Patentblatt 2024/52**

(21) Anmeldenummer: **24183169.2**

(22) Anmeldetag: **19.06.2024**

(51) Internationale Patentklassifikation (IPC):
**B60T 8/26** (2006.01)    **B62L 3/00** (2006.01)

(52) Gemeinsame Patentklassifikation (CPC):
**B60T 8/26; B60T 8/261; B62L 3/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **20.06.2023 DE 102023205770**

(71) Anmelder: **Gustav Magenwirth GmbH & Co. KG**
**72574 Bad Urach (DE)**

(72) Erfinder:
- **Glück, Oskar**
  **72768 Reutlingen (DE)**
- **Neutsch, Christian**
  **18439 Stralsund (DE)**
- **Rösing, Philipp**
  **73765 Neuhausen (DE)**

(74) Vertreter: **Friese Goeden Patentanwälte PartGmbB**
**Widenmayerstraße 49**
**80538 München (DE)**

(54) **BREMSKRAFTVERTEILVORRICHTUNG**

(57)    Die Erfindung betrifft eine Bremskraftverteilvorrichtung (100) für ein Bremssystem, insbesondere eines lenkergeführten Fahrzeugs, insbesondere eines Fahrrads und weiter insbesondere eines Lastenfahrrads, mit einem ersten Bremskreis (A) und einem zweiten Bremskreis (B), wobei die Bremskraftverteilvorrichtung (100) ein Gehäuse (101) aufweist, in dem ein erster Einlass (120) für den ersten Bremskreis (A), ein erster Auslass (140) für den ersten Bremskreis (A), ein zweiter Einlass (110) für den zweiten Bremskreis (B), ein zweiter Auslass (130) für den zweiten Bremskreis (B) und eine Bohrung (102) vorgesehen ist, wobei in der Bohrung (102) ein erster Kolben (160) und ein zweiter Kolben (150) verschiebbar angeordnet sind,
wobei die Bremskraftverteilvorrichtung (100) eine Ventileinrichtung (185) aufweist, die derart angeordnet und eingerichtet ist, dass Ventileinrichtung (185) die hydraulische Verbindung zwischen dem zweiten Einlass (110) für den zweiten Bremskreis (B) und dem zweiten Auslass (130) für den zweiten Bremskreis (B) verschließt, wenn der Druck (p_A) an dem ersten Einlass (120) für den ersten Bremskreis (A) den Druck (p_B-IN) an dem zweiten Einlass (110) für den zweiten Bremskreis (B) übersteigt, bzw. ein Bremssystem mit einer derartigen Bremskraftverteilvorrichtung.

Fig. 7

**Beschreibung**

Die Erfindung betrifft eine Bremskraftverteilvorrichtung, insbesondere für hydraulische Bremsen lenkgeführter Fahrzeuge, gemäß dem Oberbegriff von Anspruch 1 bzw. ein Bremssystem mit einer derartigen Bremskraftverteilvorrichtung.

Im stark wachsenden Sektor der Lastenräder (Cargo) wächst auch die Vielfalt der Fahrzeugkonzepte. Fast alle Konzepte zeichnen sich dadurch aus, dass das Verhältnis der Gesamtmasse im beladenen und unbeladenen Zustand stark differenzieren.

Dementsprechend schwierig ist es, ein geeignetes Bremssystem zur sicheren sturzfreien Verzögerung zu generieren. Hier kann ein kombiniertes Bremssystem (CBS-System, d.h. Combined Braking System) definierter Bremskraftverteilung oder ein variabler Bremskraftverteiler Abhilfe schaffen.

Im Fall eines kombinierten Bremssystems ergibt sich der weitere Vorteil, dass CBS-Systeme nach aktueller Rechtslage eine adäquate Alternative zum Verbau eines ABS-Systems im Bereich der Fahrzeugklasse L3e-A 1 darstellen.

Aus dem Stand der Technik sind Bremskraftverteilvorrichtungen für Bremssystem mit einer ersten Gebervorrichtung, einer zweiten Gebervorrichtung, einem ersten Bremskreis und einem zweiten Bremskreis bekannt, wobei die erste Gebervorrichtung dem ersten Bremskreis zugeordnet ist, und die zweite Gebervorrichtung dem zweiten Bremskreis zugeordnet ist, wobei bei Betätigung der Gebervorrichtung eines Bremskreises auch die Nehmervorrichtung des jeweils anderen Bremskreises angesprochen bzw. mit Druck in einem bestimmten Verhältnis zu dem Druck an der jeweils anderen Nehmervorrichtung des anderen Bremskreises beaufschlagt werden.Diese bekannten Lösungen haben den Nachteil, dass das Druckverhältnis nicht an die bestehenden Verhältnisse angepasst werden kann und immer die Nehmervorrichtungen beider Bremskreise angesprochen werden, wenn eine Gebervorrichtung eines Bremskreises betätigt wird.

Bei lenkergeführten Fahrzeugen, wie beispielsweise Fahrrädern und Lastenfahrrädern, ist die Gebervorrichtung des ersten Bremskreises üblicherweise auf einer Seite des Lenkers und die Gebervorrichtung des zweiten Bremskreises auf der anderen Seite des Lenkers angeordnet, d.h eine Gebervorrichtung ist auf der linken Griffseite des Lenkers und die andere Gebervorrichtung ist auf der rechten Griffseite des Lenkers angeordnet.

Gattungsfremde Drucksteuervorrichtungen für hydraulische Zweikreis-Bremssysteme sind dem Fachmann beispielsweise aus der US 4 458953 A und DE 28 49 806 C3 bekannt. Diese Bremssysteme für steuerradgeführte Kraftfahrzeuge weisen nur eine einzige gemeinsame Gebervorrichtung auf, d.h. ein Bremspedal, bei dessen Betätigung immer beide Bremskreise angesprochen werden. Der Fachmann wird daher diese gattungsfremden Drucksteuervorrichtungen bei der Suche nach Lösungen für die folgende Aufgabe nicht berücksichtigen, die auf Bremskraftverteilvorrichtungen gerichtet ist, die nicht nur eine Gebervorrichtung, sondern zwei Gebervorrichtungen aufweist, die von dem Fahrer lenkergeführter Fahrzeuge in der Regel gleichzeitig aber ggf. unterschiedlich stark betätigt werden.

Der vorliegenden Erfindung liegt daher die Aufgabe zugrunde, eine Bremskraftverteilvorrichtung anzugeben, bei der in abhängig von den Fahrzuständen bzw. Fahrbedingungen das Verhältnis der Betätigung der beiden Bremskreise einstellbar ist. Vorteilhafterweise soll dabei auch ein Bremskreis unabhängig von dem anderen Bremskreis betätigbar bleiben.

Diese Aufgabe wird durch eine Bremskraftverteilvorrichtung gemäß Anspruch 1 gelöst. Weitere vorteilhafte Weiterbildungen der erfindungsgemäßen Bremskraftverteilvorrichtung sind in den abhängigen Ansprüchen angegeben.

Gemäß einer Ausführung der Erfindung wird eine Bremskraftverteilvorrichtung für ein Bremssystem, insbesondere eines lenkergeführten Fahrzeugs, insbesondere eines Fahrrads und weiter insbesondere eines Lastenfahrrads, mit einem ersten Bremskreis und einem zweiten Bremskreis angegeben, wobei die Bremskraftverteilvorrichtung einen Gehäuse aufweist, in dem ein erster Einlass für den ersten Bremskreis, ein erster Auslass für den ersten Bremskreis, ein zweiter Einlass für den zweiten Bremskreis, ein zweiter Auslass für den zweiten Bremskreis und eine Bohrung vorgesehen ist, wobei in der Bohrung ein erster Kolben und ein zweiter Kolben verschiebbar angeordnet sind, dadurch gekennzeichnet, dass die Bremskraftverteilvorrichtung eine Ventileinrichtung aufweist, die derart angeordnet und eingerichtet ist, dass die Ventileinrichtung die hydraulische Verbindung zwischen dem zweiten Einlass für den zweiten Bremskreis und dem zweiten Auslass für den zweiten Bremskreis verschließt, wenn der Druck an dem ersten Einlass für den ersten Bremskreis den Druck an dem zweiten Einlass für den zweiten Bremskreis übersteigt.

Erfindungsgemäß kann die Ventileinrichtung derart angeordnet und eingerichtet sein, dass die Ventileinrichtung die hydraulische Verbindung zwischen dem zweiten Einlass für den zweiten Bremskreis und dem zweiten Auslass für den zweiten Bremskreis öffnet, wenn der Druck an dem ersten Einlass für den ersten Bremskreis von dem Druck an dem zweiten Einlass für den zweiten Bremskreis überstimmt wird.

Erfindungsgemäß kann der erste Kolben einen Durchmesser aufweisen, der kleiner als der Durchmesser des zweiten Kolbens ist.

Erfindungsgemäß kann die Bremskraftverteilvorrichtung derart angeordnet und ausgebildet sein, dass der erste Kolben in Richtung des zweiten Kolbens gedrückt wird, wenn der Druck an dem ersten Einlass für den ersten Bremskreis den Druck an dem zweiten Einlass für den zweiten Bremskreis (B) übersteigt.

Erfindungsgemäß kann die die Ventileinrichtung ein Ventilschließglied und einen Ventilschließgliedsitz aufweisen, die zwischen dem ersten Kolben und dem zweiten Kolben angeordnet sind.

Erfindungsgemäß kann der erste Kolben eine erste Konusfläche aufweisen und kann der zweite Kolben eine zweite Konusfläche aufweisen, die derart angeordnet und ausgebildet sind, dass ein Konusventil zwischen dem ersten Kolben und den zweiten Kolben ausgebildet ist.

Erfindungsgemäß kann der erste Kolben einen Fortsatz aufweisen, an dem die erste Konusfläche ausgebildet ist.

Erfindungsgemäß kann der zweite Kolben einen Durchgang aufweisen, an dem die zweite Konusfläche ausgebildet ist.

Erfindungsgemäß kann der erste Kolben eine Stirnfläche und der zweite Kolben eine Stirnfläche aufweisen, die der Stirnfläche des ersten Kolbens gegenüberliegt, wobei die Ventilrichtung bei den Stirnflächen angeordnet ist.

Erfindungsgemäß kann die Ventileinrichtung eine Dichtungseinrichtung aufweisen, die zwischen dem ersten Kolben und dem zweiten Kolben angeordnet ist.

Erfindungsgemäß kann dabei die Dichtungseinrichtung in einer Nut angeordnet sein, die an der Stirnfläche des ersten Kolbens ausgebildet ist.

Erfindungsgemäß kann der zweite Kolben einen Durchgang aufweisen, der von der Ventileinrichtung verschließbar ist.

Erfindungsgemäß kann die Bremskraftverteilvorrichtung eine Federeinrichtung aufweisen, die den zweiten Kolben in Richtung des ersten Kolbens vorspannt.

Erfindungsgemäß kann die Bremskraftverteilvorrichtung eine Federeinrichtung aufweisen, die unmittelbar an dem zweiten Kolben angreift.

Erfindungsgemäß kann die Bremskraftverteilvorrichtung eine erste Federeinrichtung aufweisen, die mittelbar an dem zweiten Kolben über eine Federteller angreift, und eine zweite Federeinrichtung aufweisen, unmittelbar an dem zweiten Kolben angreift.

Erfindungsgemäß kann bzw. können die Federeinrichtungen den zweiten Kolben in Richtung eines Anschlags vorspannen, der in dem Gehäuse der Bremskraftverteilvorrichtung vorgesehen ist.

Erfindungsgemäß kann die Bremskraftverteilvorrichtung einen Versteller aufweisen, der derart angeordnet und ausgebildet ist, dass mit dem Versteller die Federeinrichtung einstellbar ist, die auf den zweiten Kolben wirkt.

Dabei kann erfindungsgemäß die Bremskraftverteilvorrichtung einen Federteller aufweisen, auf den die Federvorspannkraft der Federeinrichtung wirkt, wobei vorzugsweise mit dem Versteller die Federvorspannkraft der Federeinrichtung einstellbar ist, die auf den Federteller wirkt.

Dabei kann erfindungsgemäß der Versteller eine Verstelleinrichtung aufweisen, mit der der Versteller einstellbar ist.

Erfindungsgemäß kann die Bremskraftverteilvorrichtung einen Druckbegrenzer aufweisen, der derart angeordnet und ausgebildet ist, dass mit dem Druckbegrenzer die Federkraft der Federeinrichtung einstellbar ist, die auf den zweiten Kolben wirkt.

Erfindungsgemäß kann der Druckbegrenzer eine Verstelleinrichtung aufweisen, mit der der Druckbegrenzer einstellbar ist.

Erfindungsgemäß kann die Bremskraftverteilvorrichtung einen Druckbegrenzer aufweisen, der derart angeordnet und ausgebildet ist, dass mit dem Druckbegrenzer die maximale Auslenkung des ersten Kolbens und somit des zweiten Kolbens begrenzt wird.

Erfindungsgemäß kann die Bremskraftverteilvorrichtung einen Druckbegrenzer aufweisen, der derart angeordnet und ausgebildet ist, dass mit dem Druckbegrenzer die Auslenkung von dem ersten Kolben und somit des zweiten Kolbens unterbunden werden kann. Das hat den Vorteil, dass damit die beiden Bremskreise zwei unabhängig von einander funktionierende Bremskreise sein können.

Erfindungsgemäß kann die Bremskraftverteilvorrichtung einen Druckminderer aufweisen, der derart angeordnet und ausgebildet ist, dass der Druck an dem Auslass des zweiten Bremskreises gemindert wird, wenn der Druck einen bestimmten Wert übersteigt.

Erfindungsgemäß kann der Druckminderer eine Verstelleinrichtung aufweisen, mit der der Druckminderer einstellbar ist.

Erfindungsgemäß kann die Bremskraftverteilvorrichtung mit einem Steuergerät gekoppelt sein, in dem Fahrzustandsdaten gesammelt werden, die von Sensoren erfasst werden, und in dem Steuerdaten zur Verstellung der Verstelleinrichtung des Druckbegrenzers und/oder der Verstelleinrichtung des Druckminderers und/oder des Verstellrads des Verstellers in Abhängigkeit von den Fahrzustanddaten erzeugt werden.

Die vorliegende Erfindung betriff auch ein Bremssystem mit einer ersten Gebervorrichtung, einer zweiten Gebervorrichtung, einem ersten Bremskreis und einem zweiten Bremskreis, wobei die erste Gebervorrichtung dem ersten Bremskreis zugeordnet ist, und die zweite Gebervorrichtung dem zweiten Bremskreis zugeordnet ist, und mit einer erfindungsgemäßen Bremskraftverteilvorrichtung gemäß einem oder einer Kombination der hier genannten Merkmale.

Die Erfindung wird im Folgenden anhand der in den Figuren gezeigten Ausführungsbeispiele beschrieben. Dabei werden folgende Bezugszeichen verwendet:

| 100 | Bremskraftverteilvorrichtung |
| 101 | Gehäuse |
| 102 | Bohrung |
| 103 | Anschlag |
| 105 | Abschnitt |
| 106 | Abschnitt |
| 110 | Einlass Kanal B (B-IN), i.d.R. Vorderradbremse oder Hinterradbremse |
| 120 | Einlass Kanal A (A-IN), i.d.R. Hinterradbremse oder Vorderradbremse |
| 130 | Auslass Kanal B (B-OUT), i.d.R. Vorderradbremse oder Hinterradbremse |
| 140 | Auslass Kanal A (A-OUT), i.d.R. Hinterradbremse oder Vorderradbremse |
| 150 | Kolben B |
| 151 | Federeinrichtung |
| 152 | Nut |
| 153 | Dichtungseinrichtung |
| 154 | Kolbenkörper |
| 155 | Stirnfläche |
| 157 | Durchgang |
| 159 | Konusfläche |
| 160 | Kolben A |
| 161 | Federeinrichtung |
| 162 | Nut |
| 163 | Dichtungseinrichtung |
| 164 | Kolbenkörper |
| 165 | Stirnfläche |
| 166 | Nut |
| 167 | Dichtungseinrichtung |
| 168 | Fortsatz |
| 169 | Konusfläche (Ventilschließglied) |
| 170 | Federteller |
| 171 | Federaufnahme |
| 173 | Stirnfläche |
| 174 | Schnüffelkanal |
| 180 | Deckel |
| 181 | Federeinrichtung |
| 185 | Ventileinrichtung |
| 190 | Verschlussschraube |
| 210 | Druckbegrenzer |
| 211 | Verstelleinrichtung für Druckbegrenzer 210 |
| 220 | Druckminderer |
| 221 | Verstelleinrichtung für Druckminderer 220 |

Sofern nicht anders beschrieben, sollen in der vorliegenden Offenbarung sich um den Wert 100 bzw. eines Vielfachen von 100 unterscheidende Bezugszeichen die gleichen bzw. entsprechenden Merkmale bzw. Komponenten beschreiben, so dass auf die jeweils entsprechenden Beschreibungen verwiesen werden kann. Beispielsweise werden auf diese Weise mit den Bezugszeichen 100, 200, etc. eine Bremskraftverteilvorrichtung bezeichnet.

Kurzbeschreibung der Figuren:

Fig. 1    zeigt eine Schnittansicht einer Bremskraftverteilvorrichtung gemäß einer ersten Ausführung der Erfindung.

Fig. 2    zeigt die Bremskraftverteilvorrichtung von Fig. 1 in einem Zustand, wenn nur ein Bremskreis, wie z.B. die Vorderradbremse oder die Hinterradbremse betätigt wird.

Fig. 3    zeigt die Bremskraftverteilvorrichtung von Fig. 1 in einem Zustand, wenn nur ein Bremskreis, wie z.B. die Hinterradbremse oder die Vorderradbremse betätigt wird.

Fig. 4 zeigt die Bremskraftverteilvorrichtung von Fig. 1 in einem Zustand, wenn zusätzlich zur Betätigung des einen Bremskreis der andere Bremskreis betätigt wird, d.h. zusätzlich zu der Hinterradbremse oder der Vorderradbremse auch die Vorderradbremse oder die Hinterradbremse.

Fig. 5 zeigt eine Explosionszeichnung einer Bremskraftverteilvorrichtung gemäß einer zweiten Ausführung der Erfindung.

Fig. 6 zeigt eine Schnittansicht der Bremskraftverteilvorrichtung von Fig. 5.

Fig. 7 zeigt die Bremskraftverteilvorrichtung von Fig. 5 in einem Zustand, wenn nur ein Bremskreis, wie z.B. die Hinterradbremse oder die Vorderradbremse betätigt wird.

Fig. 8 zeigt die Bremskraftverteilvorrichtung von Fig. 5 in einem Zustand, wenn nur ein Bremskreis, wie z.B. die Vorderradbremse oder die Hinterradbremse betätigt wird.

Fig. 9 zeigt die Bremskraftverteilvorrichtung von Fig. 5 in einem Zustand, wenn zusätzlich zur Betätigung des einen Bremskreises auch der andere Bremskreis betätigt wird, d.h. zusätzlich zu der Vorderradbremse oder der Hinterradbremse auch die Hinterradbremse oder die Vorderradbremse.

Fig. 10 zeigt die Bremskraftverteilvorrichtung von Fig. 5 in dem Zustand von Fig. 9, wobei Durchmesser zur Beschreibung der wirksamen Kolbenfläche eingezeichnet sind.

Fig. 11 zeigt die Bremskraftverteilvorrichtung von Fig. 5 in einem Zustand, wenn zusätzlich zur Betätigung des einen Bremskreises auch der andere Bremskreis , dh. zusätzlich zur Betätigung der Hinterradbremse oder der Vorderachse gemäß Fig. 7 auch die Vorderradbremse oder die Hinterradbremse betätigt wird.

Fig. 12 zeigt eine Fig. 6 entsprechende Schnittansicht einer Bremskraftverteilvorrichtung gemäß einer weiteren Ausführung der Erfindung.

Fig. 13 zeigt eine Detailansicht der Schnittansicht von Fig. 6, wobei die Bremskraftverteilvorrichtung von Fig. 12 in einem Zustand ist, wenn nur die Gebervorrichtung von Bremskreis A betätigt wird, oder wenn die Gebervorrichtungen von Bremskreis A und Bremskreis B betätigt werden und der Eingangsdruck p_B-IN unter dem Schaltdruck pSchalt liegt.

Fig. 14 zeigt eine der Detailansicht von Fig.13 entsprechende Detailansicht, wobei die Bremskraftverteilvorrichtung von Fig. 12 in einem Zustand ist, wenn der Bremshebel der Gebervorrichtung von Bremskreis A schnell, aber nicht vollständig losgelassen wird.

Fig. 15 zeigt eine der Detailansicht von Fig.13 entsprechende Detailansicht, wobei die Bremskraftverteilvorrichtung von Fig. 12 in einem Zustand ist, wenn die Gebervorrichtung von Bremskreis A erneut schnell betätigt wird, bevor der Kolben von Bremskreis B am Gehäuse anschlägt.

Fig. 16 zeigt eine der Detailansicht von Fig. 13 entsprechende Detailansicht, wobei die Bremskraftverteilvorrichtung von Fig. 12 in einem Zustand ist, wenn der Bremshebel der Gebervorrichtung von Bremskreis A erneut schnell, aber nicht vollständig losgelassen wird und dann erneut schnell betätigt wird.

Fig. 17 zeigt eine Fig. 6 bzw. Fig. 12 entsprechende Schnittansicht einer Bremskraftverteilvorrichtung gemäß einer weiteren Ausführung der Erfindung.

Fig. 18 zeigt eine Detailansicht der Schnittansicht von Fig. 17, wobei die Bremskraftverteilvorrichtung von Fig. 17 in einem Zustand ist, wenn nur die Gebervorrichtung von Bremskreis A betätigt wird, oder wenn die Gebervorrichtungen von Bremskreis A und Bremskreis B betätigt werden und der Eingangsdruck p_B-IN unter dem Schaltdruck pSchalt liegt.

Fig. 19 zeigt eine der Detailansicht von Fig.17 entsprechende Detailansicht, wobei die Bremskraftverteilvorrichtung von Fig. 18 in einem Zustand ist, wenn der Bremshebel der Gebervorrichtung von Bremskreis A schnell, aber nicht vollständig losgelassen wird.

Fig. 20    zeigt eine der Fig. 17 entsprechende Schnittansicht einer Bremskraftverteilvorrichtung gemäß einer weiteren Ausführung der Erfindung.

Fig. 21    zeigt eine Detailansicht der Schnittansicht von Fig. 20, wobei die Bremskraftverteilvorrichtung von Fig. 20 in einem Zustand ist, wenn nur die Gebervorrichtung von Bremskreis A betätigt wird, oder wenn die Gebervorrichtungen von Bremskreis A und Bremskreis B betätigt werden und der Eingangsdruck p_B-IN unter dem Schaltdruck pSchalt liegt.

Fig. 22    zeigt eine Detailansicht der Schnittansicht von Fig. 20, wobei die Bremskraftverteilvorrichtung von Fig. 20 in einem Zustand ist, wenn die Betätigung der Gebervorrichtung von Bremskreis A beendet ist.

Fig. 23    zeigt eine Detailansicht der Schnittansicht von Fig. 20 mit einem anderen Federteller, wobei die Bremskraftverteilvorrichtung von Fig. 21 in einem Zustand ist, wenn nur die Gebervorrichtung von Bremskreis A betätigt wird, oder wenn die Gebervorrichtungen von Bremskreis A und Bremskreis B betätigt werden und der Eingangsdruck p_B-IN unter dem Schaltdruck pSchalt liegt.

Fig. 24    zeigt eine Detailansicht der Schnittansicht von Fig. 22, wobei die Bremskraftverteilvorrichtung von Fig. 22 in einem Zustand ist, wenn die Betätigung der Gebervorrichtung von Bremskreis A beendet ist.

Fig. 25    zeigt eine Detailansicht der Schnittansicht von Fig. 22, wobei die Bremskraftverteilvorrichtung von Fig. 22 in einem Zustand ist, wenn die Gebervorrichtung von Bremskreis B betätigt wird.

Fig. 26    zeigt eine Fig. 20 entsprechende Schnittansicht einer Bremskraftverteilvorrichtung gemäß einer weiteren Ausführung der Erfindung, die eine Variante ohne Federteller darstellt.

Fig. 27    zeigt eine Detailansicht der Schnittansicht von Fig. 26, wobei die Bremskraftverteilvorrichtung von Fig. 26 in einem Zustand ist, wenn nur die Gebervorrichtung von Bremskreis A betätigt wird, oder wenn die Gebervorrichtungen von Bremskreis A und Bremskreis B betätigt werden und der Eingangsdruck p_B-IN unter dem Schaltdruck pSchalt liegt.

Fig. 28    zeigt eine Detailansicht der Schnittansicht von Fig. 26, wobei die Bremskraftverteilvorrichtung von Fig. 26 in einem Zustand ist, wenn der Bremshebel der Gebervorrichtung von Bremskreis A gelöst und die Gebervorrichtung von Bremskreis B nicht betätigt ist.

Fig. 29    zeigt eine Detailansicht der Schnittansicht von Fig. 26, wobei die Bremskraftverteilvorrichtung von Fig. 26 in einem Zustand ist, wenn die Gebervorrichtung von Bremskreis B betätigt wird.

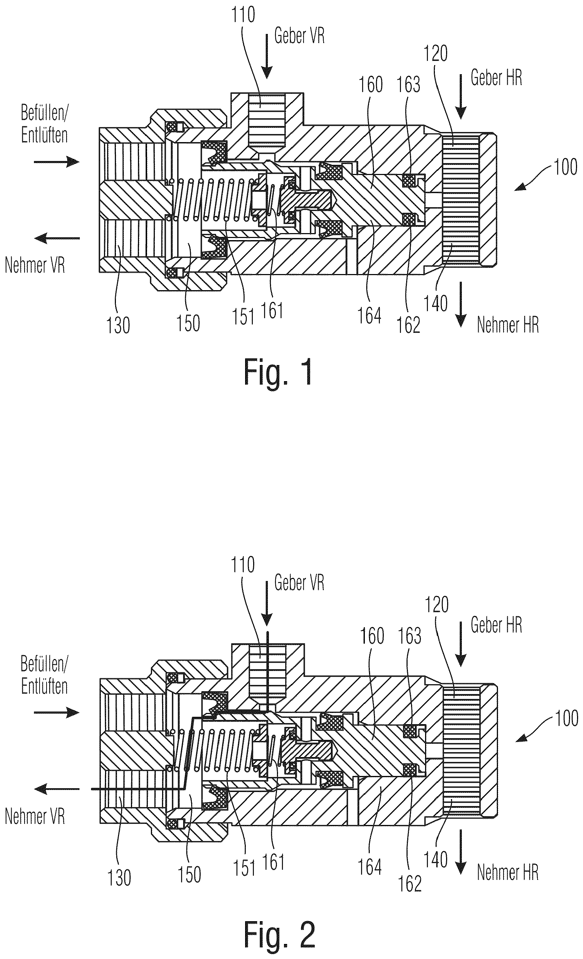

Fig. 1 zeigt eine Bremskraftverteilvorrichtung 100 mit einem Stufenkolben bzw. einer Kombination aus einen ersten und einem zweiten Kolben, welcher in bestehende Bremssysteme nachgerüstet werden kann. Damit kann der Systemdruck der zweiten Bremse (i.d.R. der Hinterradbremse) abgegriffen werden. Dieser Systemdruck der zweiten Bremse wird über den Stufenkolben auf einen geringeren Systemdruck in der ersten Bremse (i.d.R. Vorderradbremse) übersetzt. Somit kann die erste Bremse zu einem geringeren Anteil wie die zweite Bremse mit verzögern. Eine optimierte Verzögerung des Gesamtfahrzeugs stellt sich ein.

Fig. 2 zeigt den Zustand, wenn die Vorderradbremse (VR-Bremse) einzeln betätigt wird. Das Bremsmedium kann ohne weitere Beeinflussung des Stufenkolbens über die Schnüffelkanäle des Plungerkolbens zum Nehmer befördert werden. An der VR-Bremse liegt die volle Bremskraft an.

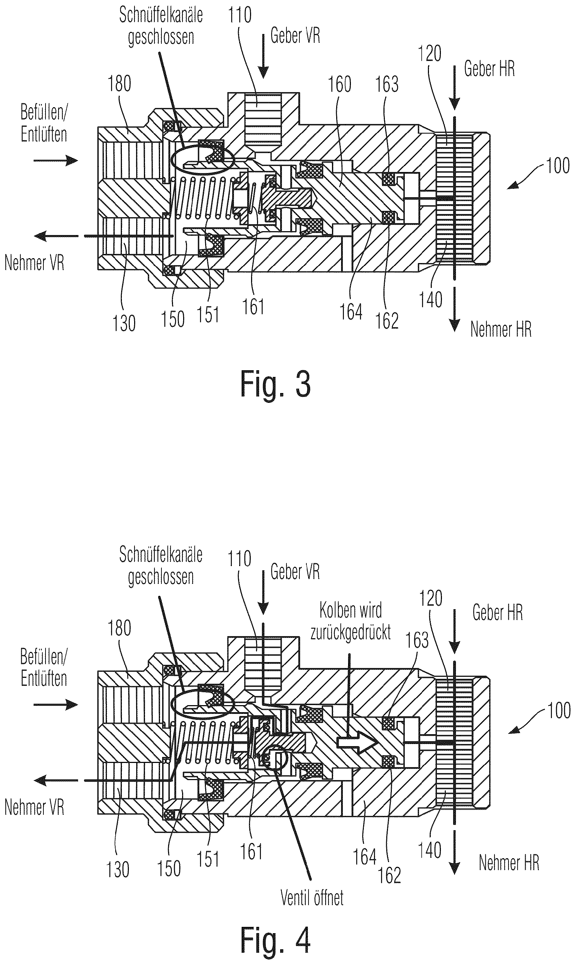

Fig. 3 zeigt den Zustand, wenn die Hinterradbremse einzeln betätigt wird. Wird die HR-Bremse betätigt, wird ein Teil des Bremsmediums dafür genutzt, den Stufenkolben zu bewegen. Dabei werden die Schnüffel-Kanäle am Plungerkolben geschlossen und es kann ein Druckaufbau zum Nehmer am Vorderrad erfolgen. Der VR-Geber ist vom Druckaufbau abgeschottet.

Fig. 4 zeigt den Zustand, wenn die HR-Bremse bereits betätigt ist und die VR-Bremse zusätzlich betätigt wird. Wird bei betätigter HR-Bremse die VR-Bremse zusätzlich über den Geber betätigt, so erfolgt bis zum Aufbau des am VR-Nehmer bereits anliegenden Systemdrucks nichts. Erst nach Überschreiten des Drucks wird ein Ventil im Stufenkolben geöffnet. Über dieses Ventil kann weiteres Bremsmedium zum VR-Nehmer transportiert und damit der Systemdruck weiter gesteigert werden. Während der Drucksteigerung erfolgt ein Zurückfahren des Kolbens. Sollte der Kolben in seine maximale Endstellung zurückfahren, so werden die Schnüffelkanäle wieder geöffnet. Beide Bremsen sind dann voll im Einsatz.

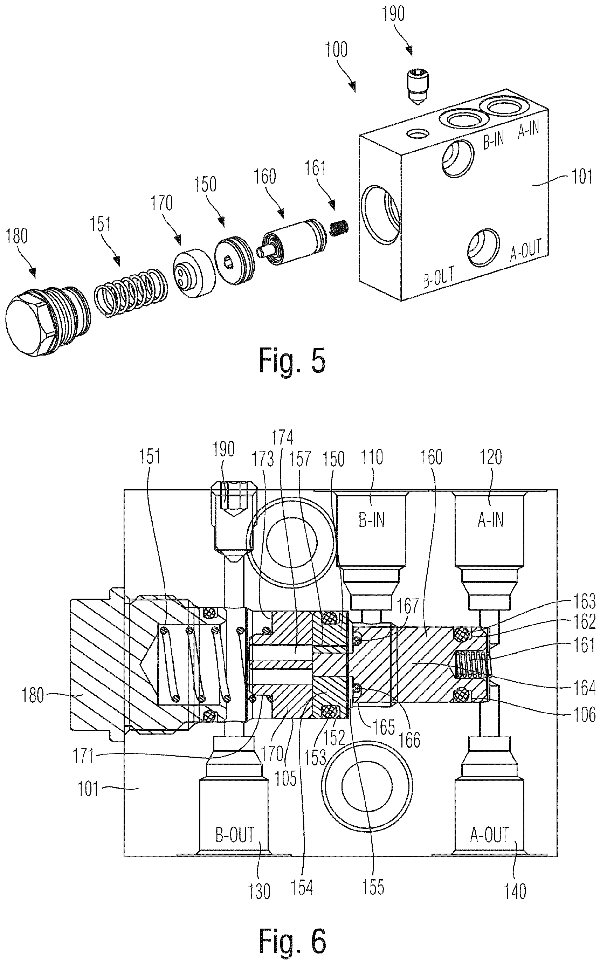

Die Figuren 5 bis 11 zeigen eine Bremskraftverteilvorrichtung 100, die ein Gehäuse 101 aufweist, in der eine Bohrung 102 mit einem ersten Abschnitt 105 und einem zweiten Abschnitt 106 vorgesehen ist. In dem ersten Abschnitt 105 ist ein Kolben 150 verschiebbar angeordnet, der einem ersten Bremskreis B (i.d.R für die Hinterradbremse) zugeordnet ist.

In dem zweiten Abschnitt 106 ist ein Kolben 160 verschiebbar angeordnet, der einem ersten Bremskreis A (i.d.R für die Vorderradbremse) zugeordnet ist. In dem Gehäuse 101 ist ein Einlass 110 und eine Auslass 130 für den Bremskreis B bzw. den Kanal B (B-IN bzw. B-OUT) vorgesehen, der i.d.R. einer hydraulischen Hinterradbremse zugeordnet ist. In dem Gehäuse 101 ist ferner ein Einlass 120 und ein Auslass 140 für den Bremskreis A bzw. den Kanal A (B-IN) vorgesehen, der i.d.R. einer hydraulischen Vorderradbremse zugeordnet ist.

Der Kolben 150 ist mit einer Federeinrichtung 151 entgegen seiner Betätigungsvorrichtung vorgespannt. In der Kolbenwand des Kolbens 150 ist eine Nut 152 vorgesehen, in der eine Dichtungseinrichtung 153 angeordnet ist, die den Kolben 150 gegen die Zylinderwandung in dem Abschnitt 105 der Bohrung 102 abdichtet. Der Kolben 150 weist einen Kolbenkörper 154 auf, an dem eine Stirnfläche 155 vorgesehen ist, die in Richtung des Kolbens 160 an dem Kolben 150 vorgesehen ist.

Der Kolben 160 ist mit einer Federeinrichtung 161 in der Betätigungsvorrichtung des Kolbens 150 vorgespannt. In der Kolbenwand des Kolbens 160 ist eine Nut 162 vorgesehen, in der eine Dichtungseinrichtung 163 angeordnet ist, die den Kolben 160 gegen die Zylinderwandung in dem Abschnitt 106 der Bohrung 102 abdichtet. Der Kolben 160 weist einen Kolbenkörper 164 auf, an dem eine Stirnfläche 165 vorgesehen ist, die in Richtung des Kolbens 150 an dem Kolben 160 vorgesehen ist. In der Stirnfläche 165 ist eine Nut 166 vorgesehen, in der eine Dichtungseinrichtung 167 angeordnet ist. Die Dichtungseinrichtung 167 dichtet die Stirnfläche 165 des Kolbens 160 gegen die Stirnfläche 155 des Kolbens 150 gedrückt wird. An dem Kolben 160 ist ein Fortsatz 168 vorgesehen, der in einen Durchgang 157 des Kolbens 150 eingreift.

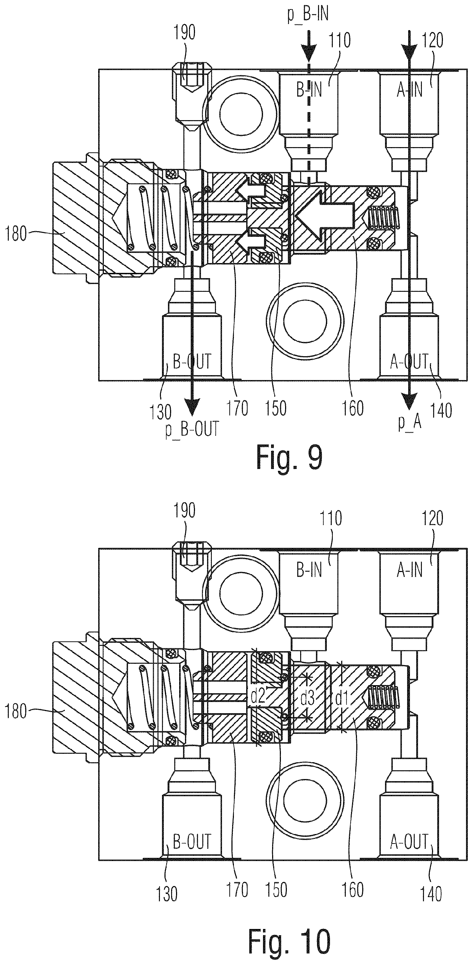

Zwischen dem Kolben 150 und 160 ist eine Ventileinrichtung 185 vorgesehen. Die Ventileinrichtung umfasst die Dirchtungseinrichtung 167, die den Durhgang 157 durch den Kolben 150 verschließt, wenn die Stirnflächen 155 des Kolbens gegen die Stirnfläche 165 des Kolbens 160 gepresst wird. Wenn die Ventileinrichtung 185 geschlossen ist, ist die hydraulische Verbindung zwischen dem Einlass 110 und dem Auslass 130 für den Bremskreis B unterbrochen. Eine Betätigung der Nehmervorrichtung von Bremskreis B kann über den Druck erfolgen, mit dem der Kolben 160 gegen den Kolben 150 gepresst wird, d.h. über die Betätigung der Gebervorrichtung von Bremskreis A. Weiter kann der Druck in der Nehmervorrichtung von Bremskreis B durch eine zusätzliche Betätigung der Gebervorrichtung von Bremskreis B gesteigert werden, und zwar über die resultierende Ringfläche aus d2 - d1 (vgl. Abbildung 10) und wenn der von der Gebervorrichtung von Bremskreis B erzeugte Druck den Schaltdruck p_schalt wie oben beschrieben nicht erreicht oder überschreitet (bei Vernachlässigung der Feder- und Reibungskräfte).

An dem Kolben 150 ist auf der dem Kolben 160 gegenüberliegenden Seite ein Federteller 170 mit einer Federaufnahme 171 vorgesehen. Die Federaufnahme 171 umfasst einen Fortsatz, der von der Federeinrichtung 151 umschlossen ist. Um den Fortsatz herum ist eine Stirnfläche 173 vorgesehen. Entlang der Oberfläche der Federaufnahme erstrecken sich Schnüffelkanäle 174, Durch das Innere des Federtellers 170 verlaufen Schnüffelkanäle bzw. Durchströmkanäle 174.

Die Bremskraftverteilvorrichtung 100 weist einen Deckel 180 auf, mit dem die Bohrung 102 mit den darin angeordneten Kolben 150, 160 und Federeinrichvtungen 151, 161 verschlossen werden kann.

Die Bremskraftverteilvorrichtung 100 weist eine Verschlussschraube 190 auf, mit der eine Öffnung verschlossen werden kann, über die die Bremskraftverteilvorrichtung 100 mit Hydraulikfluid befüllt bzw. entlüftet werden kann.

Erfindungsgemäß können auch Vorderradbremse und Hinterradbremse je nach den Anforderungen der konkreten Anfornderungen der Anwendung ausgetauscht werden.

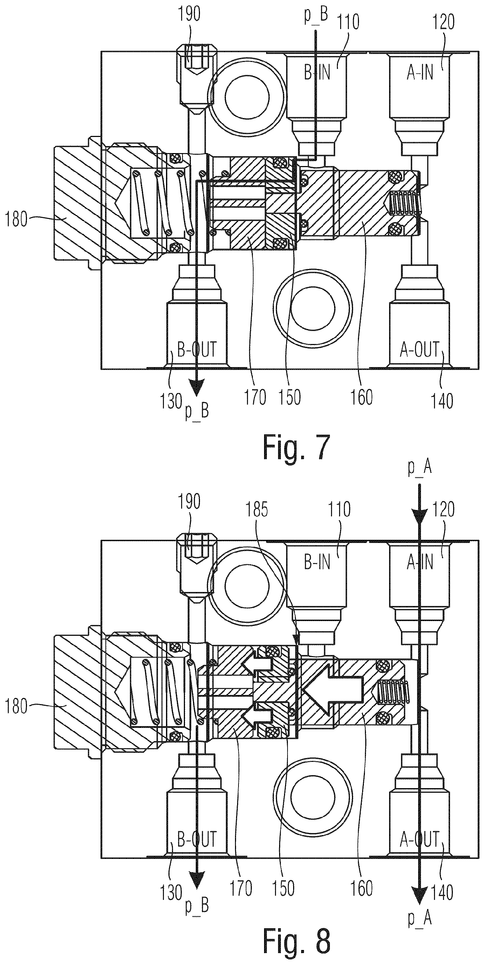

Fig. 7 zeigt die Bremskraftverteilvorrichtung 100 in einem Zustand wenn nur die Gebervorrichtung von Bremskreis B betätigt wird. An dem Einlass 110 liegt ein Druck p_B an, der sich zwischen den Stirnflächen 165 und 155 der beiden Kolben 160 und 150 und durch den Kolben 150 und entlang des Federtellers 170 durch die Schnüffelkanäle 174 zu dem Auslass 130 ausbreitet. Der Kolben 160 wird dabei durch den Druck in seinem rechten Anschlag gehalten. Der Druck wird nur an die Nehmervorrichtung von Bremskreis B weitergegeben. Eine Verteilung zu der Nehmervorrichtung von Bremskreis A erfolgt nicht.

Fig. 8 zeigt die Bremskraftverteilvorrichtung 100 in einem Zustand, wenn nur die Gebervorrichtung von Bremskreis A betätigt wird. An dem Einlass 110 liegt ein Druck p_A an. Das Hydraulikfluid kann den Druck an dem Kolben 160 vorbei an den Auslass 140 und weiter zu der Nehmervorrichtung von Bremskreis A weitergeben.

Der Kolben 160 wird dabei durch den Druckaufbau in Fig. 8 nach links verschoben, wie durch den breiten Pfeil dargestellt ist. Die Ventileinrichtung 185 wird geschlossen, weil die Dichtungseinrichtung 167 gegen die Stirnfläche 155 des Kolbens 150 gepresst wird. Damit ist die hydraulische Verbindung zwischen dem Einlass 110 (B-IN) und dem Auslass 130 (B-OUT) geschlossen.

Wegen der Betätigung der Gebervorrichtung von Bremskreis A übt der Kolben 160 eine Kraft auf den Kolben 150 aus und verschiebt diesen in Figur 9 nach links, wodurch Druck p_B auf den Auslass 130 zum Aufbau eines Systemdrucks im Bremskreis B ausgeübt wird. Die Nehmervorrichtung von Bremskreis B wird betätigt.

Über den Einlass 110 kann Hydraulikfluid in das Gehäuse 101 der Bremskraftverteilvorrichtung 100 nachlaufen.

Da der Kolben 160 einen kleineren Durchmesser d1 bzw. d_(Kolben A) als der Kolben 150 aufweist, der einen größeren Durchmesser d2 bzw. d_Kolben_B hat, gibt es einen Durchmessersprung:

$$\texttt{d1} \quad < \quad \texttt{d2}$$

Wegen dieses Durchmessersprungs stellt sich ein Druckverhältnis von

$$\texttt{p\_A} \quad > \quad \texttt{p\_B}$$

ein.

Die Figuren 9 und 10 zeigen die Bremskraftverteilvorrichtung 100 von Fig. 5 in einem Zustand, wenn zusätzlich zur Betätigung der Gebervorrichtung des Bremskreises A (z.B. Vorderradbremse oder Hinterradbremse), wie in Fig. 8 gezeigt und im Zusammenhang damit beschrieben (Druck p_A liegt am Einlass 120 an), auch die Gebervorrichtung des Bremskreises B (z.B. Hinterradbremse oder Vorderradbremse) betätigt wird (Druck p_B-IN liegt am Einlass 110 an).

Es erfolgt zunächst der Vorgang, wie er in Fig. 8 gezeigt und im Zusammenhang damit beschrieben ist. Der Druck p_A vom Einlass 120 wird an den Auslass 140 weitergegeben und liegt dort an.

Wird nun zusätzlich die Gebervorrichtung von Bremskreis B betätigt, liegt der Druck p_B-IN an dem Einlass 110 an. Der Druck p_B-IN wirkt unterstützend auf den Kolben 150, jedoch nur über die resultierende Ringfläche betreffend die Durchmesser d1 und d2, wie in Fig. 10 gezeigt. Der Durchmesser d2 ist der Durchmesser des Kolbens 150 und der Durchmesser d1 ist der Durchmesser des Kolbens 160. Die Wirkfläche für den Druck p_B-IN ist somit die Ringfläche der Stirnfläche 155 des Kolbens 150.

Übersteigt der Druck p_B-IN einen Schaltdruck, öffnet sich sich die Ventileinrichtung 185, weil der Kolben 160 wegen des Drucks p_B-IN gegen den Druck p_A zurückgeschoben wird, d.h. in Fig. 10 nach rechts. Der Schaltdruck ist dabei abhängig von den Parametern p_A, d1 und d3 und ergibt sich zu:

$$\texttt{p\_Schalt = d1}^2 \texttt{ / (d1}^2 \texttt{ - d3}^2\texttt{) * p\_A}$$

Die Ventileinrichtung 185 wird geöffnet, sobald der Eingangsdruck p_B-IN am Einlass 110 den Schaltdruck p_Schalt übersteigt. Dann liegt der Druck p_A der Gebervorrichtung am Einlass 120 an. Die Bremskraftverteilvorrichtung 100 gibt diesen Druck über den Auslass 140 an die Nehmervorrichtung des Bremskreises A weiter. Der Druck p_B-IN übersteigt den Schaltdruck p_Schalt, so dass der Druck p_B-IN an dem Auslass 130 für die Nehmervorrichtung des Bremskreises B anliegt.

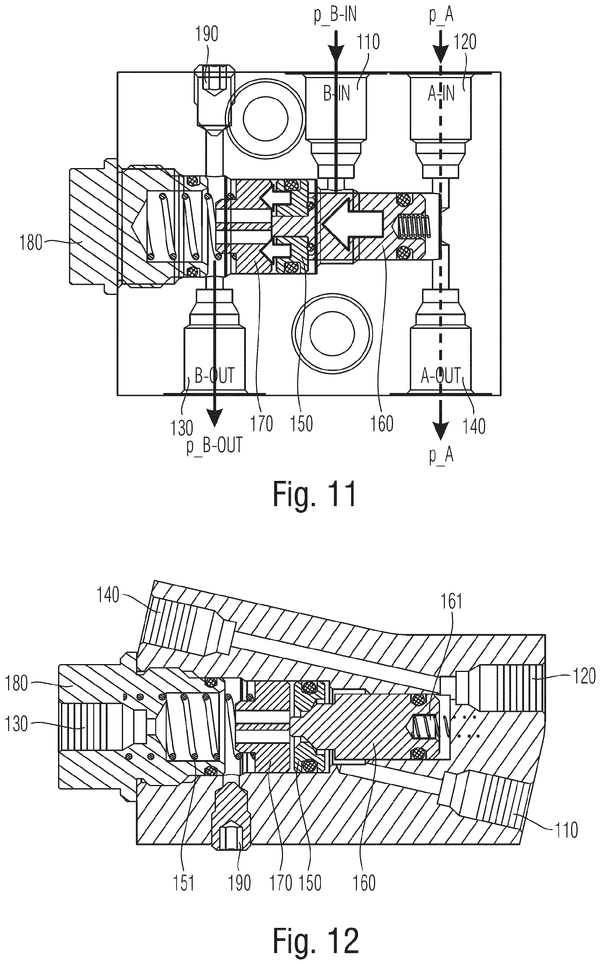

Fig. 11 zeigt die Bremskraftverteilvorrichtung 100 von Fig. 5 in einem Zustand, wenn zusätzlich zur Betätigung der Gebervorrichtung des Bremskreises B (z.B. Hinterradbremse oder Vorderradbremse), wie in Fig. 8 gezeigt und im Zusammenhang damit beschrieben (Druck p_B liegt am Einlass 110 an), auch die Gebervorrichtung des Bremskreises A (z.B. Vorderradbremse oder Hinterradbremse) betätigt wird (Druck p_A liegt am Einlass 120 an).

Es erfolgt zunächst der Vorgang, wie er in Fig. 7 gezeigt und im Zusammenhang damit beschrieben ist. Der Druck p_B-IN vom Einlass 110 wird an den Auslass 130 weitergegeben und liegt dort an. Wird nun die Gebervorrichtung von Bremskreis A betätigt und dadurch zusätzlich Druck p_A an dem Einlass 120 anliegt, so muss zunächst der Druck p_B-IN überwunden werden, so dass sich der Kolben A nach links gegen den Druck p_B-IN bewegen und damit die Ventileinrichtung 185 schließen kann, wenn die Dichtungseinrichtung 167 gegen die Stirnfläche 155 des Kolbens 150 gedrückt wird.

Wenn die Gebervorrichtung des Bremskreises A weiter betätigt wird, so dass der Druck p_A über p_B-IN hinaus gesteigert wird, so wird der Durchfluss über den Kolben 150 durch das Schließen der Ventileinrichtung 185 geschlossen und folglich p_B in den weiterhin konstanten Druck p_B-IN und den variablen Druck p_B-OUT geteilt: p_B-OUT kann abhängig von p_A über p_B-IN hinaus gesteigert werden. Erst wenn p_A konstant gehalten und p_B-IN wieder über den Schaltdruck p_Schlat hinaus erhöht wird, kann die Ventileinrichtung 185 öffnen.

Grundsätzlich gilt:

- Wird die Gebervorrichtung von Bremskreis A betätigt, so wird auch die Nehmervorrichtung von Bremskreis B entsprechend des Durchmesserverhältnissen $d1^2 / d2^2$ mit Druck beaufschlagt.

- Wird die Gebervorrichtung von Bremskreis B betätigt, wird die Nehmervorrichtung von Bremskreis A nicht mit Druck beaufschlagt, solange die Gebervorrichtung von Bremskreis A unbetätigt ist..

- Mit Betätigung der Gebervorrichtung von Bremskreis B kann der durch die Gebervorrichtung von Bremskreis A erzeugten Druck in dem Bremskreis B überstimmt werden.

Welcher Kanal auf welche Bremse gelegt wird, ist abhängig vom Fahrzeug bzw. dessen Achslastverteilung zu beurteilen.

Bei einem "normalen" Fahrrad kann Bremskreis A = Vorderradbremse sinnvoll sein.

Bei einem Lastenrad mit der Ladefläche vor dem Fahrer und einem kleinen Vorderrad und einem großen Hinterrad kann Bremskreis A = Hinterrad von Vorteil sein.

Die Figuren 12 bis 16 zeigen eine weitere Bremskraftverteilvorrichtung gemäß einer Ausführung der Erfindung, die im Wesentlichen der Ausführung der Fig. 5 entspricht. Im Unterschied zu der Ausführung von Fig. 5 ist der Auslass 130 für den Bremskreis B nicht in dem Gehäuse 101, sondern in dem Deckel 180 vorgesehen, der die Bohrung 102 verschließt, in der die Kolben 150 und 160 verschiebbar aufgenommen sind. Dadurch ergibt sich eine kleinere und kompaktere Bauweise.

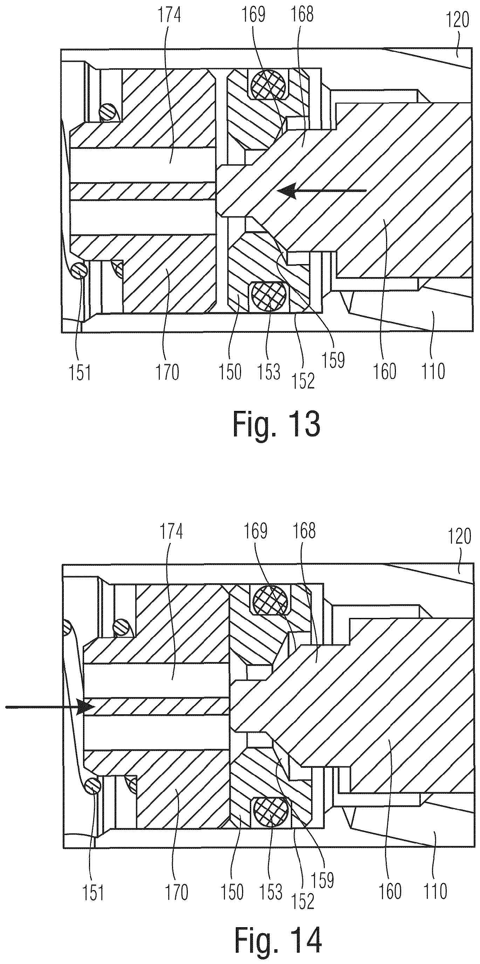

Anhand der Figuren 13 bis 16 soll im Folgenden ein Problem beschrieben werden, dass bei den Ausführungen der Fig. 5 und der Fig. 12 auftritt, wenn die Gebervorrichtung von Bremskreis A wiederholt schnell hintereinander betätigt und losgelassen wird, ohne dass der Kolben 160 des Bremskreis A und der Kolben 150 des Bremskreis B vollständig in die Ausgangslage zurückkehren können. Die Gebervorrichtung von Bremskreis B bleibt dabei durchgehend unbetätigt.

Gemäß dem Zustand von Fig. 13 wird die Gebervorrichtung von Bremskreis A betätigt. Die Ventileinrichtung 185 schließt, weil der Kolben 160 mit seiner am Fortsatz 168 ausgebildeten Konusfläche 169 an einer in dem Durchgang des Kolbens 150 ausgebildeten Konusfläche 159 anschlägt. Die Konusfläche 169 bildet somit das Ventilschließglied der Ventileinrichtung 185, während die Konusfläche 159 des Kolbens 150 den Ventielsitz der Ventileinrichtung bildet. Der Kolben 160 wird in Pfeilrichtung nach links verschoben und schiebt den Kolben 150 ebenfalls nach links. Dadurch erfolgt auch ein Druckaufbau in der Nehmervorrichtung von Bremskreis B, wobei der Rückzug in der Nehmervorrichtung von Bremskreis B überwunden wird.

Gemäß dem Zustand von Fig. 14 wird der Bremshebel der Gebervorrichtung von Bremskreis A schnell aber nicht vollständig losgelassen. Die Federeinrichtung 151 schiebt den Federteller 170 und damit den Kolben 160 entlang der Pfeilrichtung nach rechts. Der Kolben 150 bleibt zunächst aufgrund der Reibung zwischen der Dichtung 153 und der Wandung der Bohrung 102 des Gehäuses 101 an seiner Stelle. Die Ventileinrichtung 185 öffnet sich, d.h. die Konusfläche 169 des Kolbens 160 entfernt sich von der Konusfläche 159 des Kolbens 150. Der Druck in der Nehmervorrichtung des Bremskreis B ist aber höher als der Druck in der unbetätigten Gebervorrichtung von Bremskreis B, so dass Hydraulikfluid in de Ausgleichsbehälter der Gebervorrichtung von Bremskreis B zurückfließt. Der Druck in dem Bremskreis B baut sich daher wegen der geöffneten Ventileinrichtung 185 ab und es erfolgt ein Rückzug in der Nehmervorrichtung von Bremskreis B.

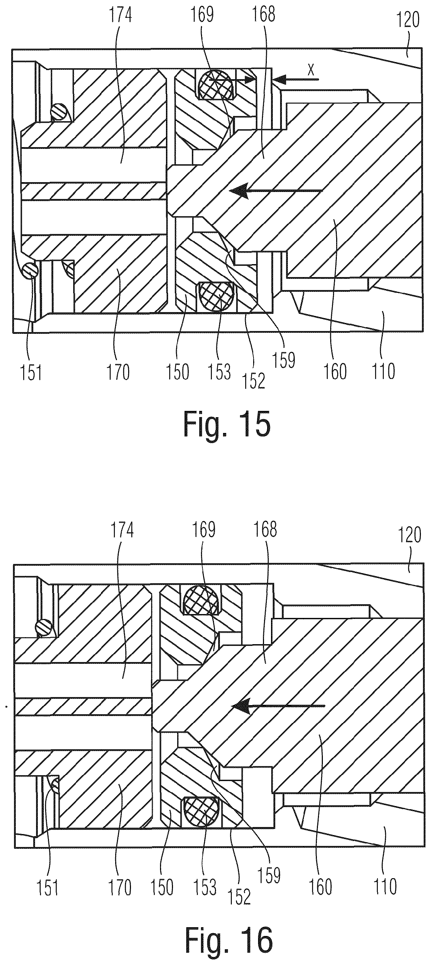

Gemäß dem Zustand von Fig. 15 wird der Bremshebel der Gebervorrichtung von Bremskreis A erneut schnell betätigt, und zwar bevor der Kolben 150 an dem Gehäuse anschlägt, sondern noch um den Abstand x in Fig. 16 nach links versetzt ist. Der Abstand x ist im Wesentlichen durch den oben beschriebenen Rückzug in der Nehmervorrichtung des unbetätigten Bremskreises B bedingt, wobei die Größe des Abstandes x abhängig davon ist, wie schnell nacheinander Geber A losgelassen und wieder betätigt wird. Die Ventileinrichtung 185 schließt, wobei der Kolben 150 bereits um den Abstand x ausgelenkt bzw. in Richtung des Pfeils nach links verschoben ist. Normalerweise bestimmt der Anschlag 103, der zwischen dem Abschnitt 105 und dem Abschnitt 106 ausgebildet ist, die Ausgangslage des Kolbens 150. In der beschriebenen Situation erreicht der Kolben 150 aber nicht seine Ausgangslage, weil die Gebervorrichtung von Bremskreis A zu schnell erneut betätigt wird.

Gemäß dem Zustand von Fig. 16 wird bei der erneuten Betätigung der Gebervorrichtung von Bremskreis A der Rückzug der Nehmervorrichtung von Bremskreis B erneut überwunden, da bei geschlossener Ventileinrichtung 185 erneut ein Druckaufbau bei der Nehmervorrichtung von Bremskreis B stattfindet. Der Kolben 150 ist jetzt weiter nach links verschoben, weil er bereits um den Weg x ausgelenkt bzw. verschoben war, d.h. die Ausgangslage des Kolbens 150 war bereits nach links versetzt. Die Absolutverschiebung ds Kolbens 150 nach links ist daher größer. Der Weg für den Kolben 160 wird dadurch auch größer. Der nötige Hebelweg der Gebervorrichtung von Bremskreis A wird ebenfalls größer.

Diese Vergrößerung der Verschiebung und des benötigten Hebelwegs addiert sich bei jeder Wiederholung, wenn die Gebervorrichtung von Bremskreis A schnell gepumpt wird, d.h. schnell nacheinander betätigt und schnell unvollständig gelöst wird. Das kann zur Folge haben, dass der Bremshebel bis auf den Lenker durchwandert und schließlich keinen hinreichenden Weg mehr hat, um die Bremse betätigen zu können.

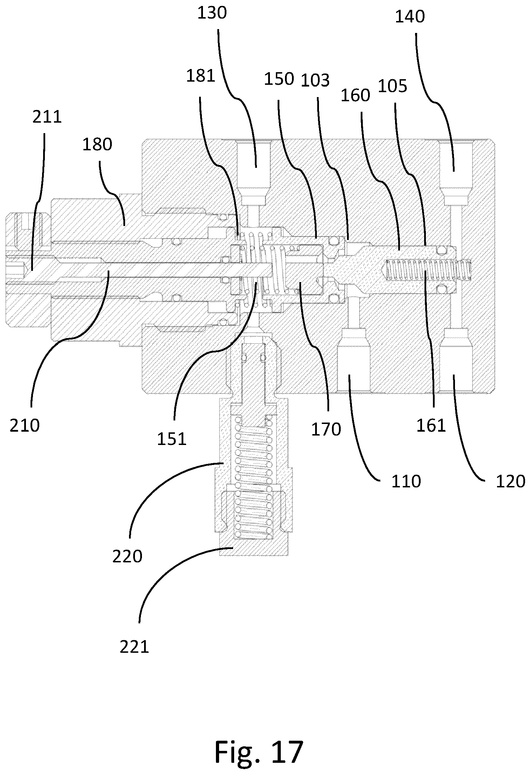

Die Ausführung der Figuren 17 bis 19 zeigt eine Lösung für dieses Problem, die auch bei den anderen Ausführungen der Erfindung vorteilhafterweise zum Einsatz kommen kann. Bei der Ausführung der Figuren 17 bis 19 ist eine weitere Federeinrichtung 181 vorgesehen, die den Kolben 150 nach rechts in Richtung des Anschlags 103 vorspannt. Somit spannt die Federeinrichtung 151 den Federteller 170 nach rechts in Richtung des Kolbens 150 und in Richtung des Kolbens 160 vor. Der Kolben 150 ist somit mittelbar über den Federteller 170 durch die Federeinrichtung 151 nach rechts vorgespannt, und zusätzlich unmittelbar durch die Federeinrichtung 181.

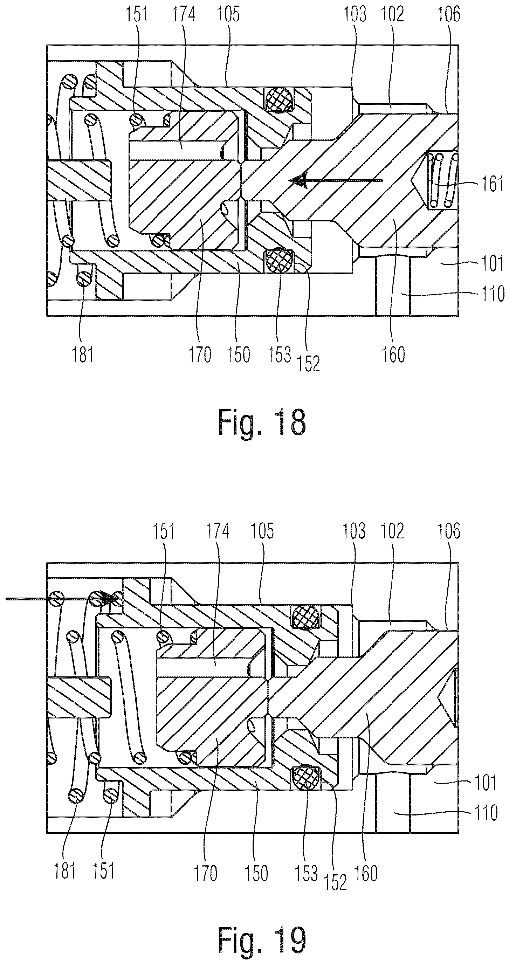

Gemäß dem Zustand von Fig. 18 wird die Gebervorrichtung von Bremskreis A betätigt. Die Ventileinrichtung 185 schließt, wie im Detail im Zusammenhang mit Fig. 13 beschrieben wurde. Der Kolben 160 wird in Pfeilrichtung nach links verschoben und schiebt den Kolben 150 ebenfalls nach links. Dadurch erfolgt auch ein Druckaufbau in der Nehmervorrichtung von Bremskreis B, wobei der Rückzug in der Nehmervorrichtung von Bremskreis B überwunden wird.

Gemäß dem Zustand von Fig. 19 wird der Bremshebel der Gebervorrichtung von Bremskreis A schnell aber nicht vollständig losgelassen. Die Federeinrichtung 181 sorgt dafür, dass der Kolben 150 direkt in seine Ausgangslage zurückgeschoben wird. Die Federeinrichtung 181 und die Federeinrichtung 151 sind dabei derart ausgelegt und aufeinander abgestimmt, dass die Ventileinrichtung 185 während der Rückstellung des Kolbens 150 in seine Ausgangslage geschlossen bleibt und die auf den Federteller wirkende Federeinrichtung 151 die Ventileinrichtung 185 nicht öffnet. Das hat zur Folge, dass das Volumen des Hydraulikfluids zwischen dem Kolben 150 und der Nehmervorrichtung des Bremskreis B unverändert bleibt. Bei einer erneuten Betätigung der Gebervorrichtung des Bremskreises A bevor der Kolben 150 an seinem Anschlag 103 am Gehäuse 101 anschlägt, wird jetzt im Gegensatz zu der Ausführung gemäß den Figuren 1 bis 4 oder der Ausführung gemäß den Figuren 6 bis 13 oder der Ausführung gemäß den Figuren 14 bis 17 der gleiche Hebelweg der Gebervorrichtung des Bremskreises A benötigt, um den gleichen Druck wie bei der vorherigen Betätigung aufzubauen. Es wird also kein zunehmend größerer Hebelweg bei wiederholter Betätigung der Bremse benötigt. Die Gefahr, dass die Bremse aufgrund eines zu kurzen Hebelwegs nicht mehr betätigt werden kann, wird vermieden.

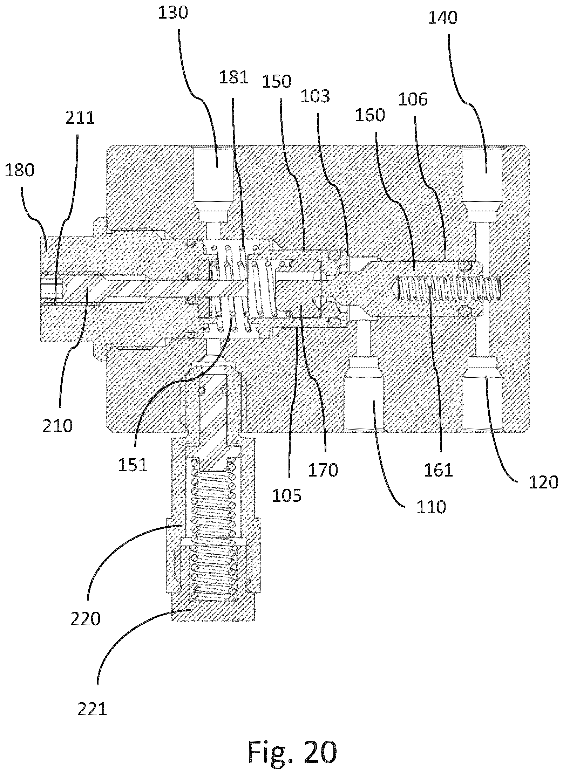

Die Figuren 20 bis 25 zeigen eine Ausführung einer erfindungsgemäßen Bremskraftverteilvorrichtung 100 mit einem Federteller.

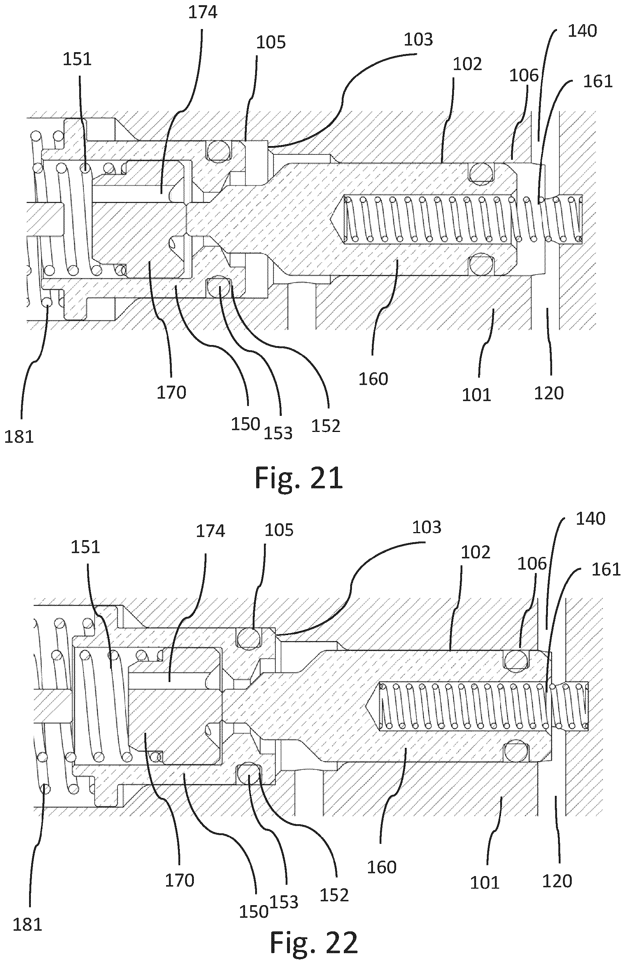

Wenn wie in Fig. 21 gezeigt, der Bremskreis A betätigt wird, wird ein Druck in Bremskreis A aufgebaut, der Kolben 160 wird nach Links ausgelenkt und schließt die Ventileinrichtung 185. Dann nimmt der Kolben 160 den Kolben 150 mit und baut Druck in Bremskreis B auf.

Sobald der Bremshebel der Gebervorrichtung von Bremskreis A losgelassen wird, baut sich der Druck in Bremskreis A ab. Dann schiebt die Federkraft der Federeinrichtung 181 den Kolben 150 bis zu dem Anschlag 103 in dem Gehäuse 101 nach rechts, wie in Fig. 22 gezeigt. Gleichzeitig schiebt die Federeinrichtung 151 den Federteller 170 und über die Anlage zwischen Federteller 170 und Kolben 160 wird auch der Kolben 160 bis zum Anschlag im Gehäuse 101 nach rechts verschoben.

Die Ausgangslagen der Kolben 150 und 160 sind bei dieser einzelnen Betätigung von Geber A oder Geber B und jeder folgenden einzelnen Betätigung von Geber A oder Geber B unabhängig davon, welche Reihenfolge der Betätigung der Gebervorrichtungen von Bremskreis A und B vorher erfolgt ist. Bei Betätigung beider Gebervorichtungen sorgt, abhängig von der Betätigungsreihenfolge, entweder die Gebervorichtung von Bremskreis A oder die Gebervorichtung von Bremskreis B dafür, dass der Rückzug an der Nehmervorrichtung von Bremskreis B überwunden wird und somit kann der Hebelweg der Gebervorrichtung leicht unterschiedlich sein. Auch das oben beschriebene Pumpen hat keinen Einfluss auf die Ausgangslagen der Kolben 150, 160. Daher sind die Hebelwege der Gebervorrichtungen der Bremskreise A und B gleichbleibend.

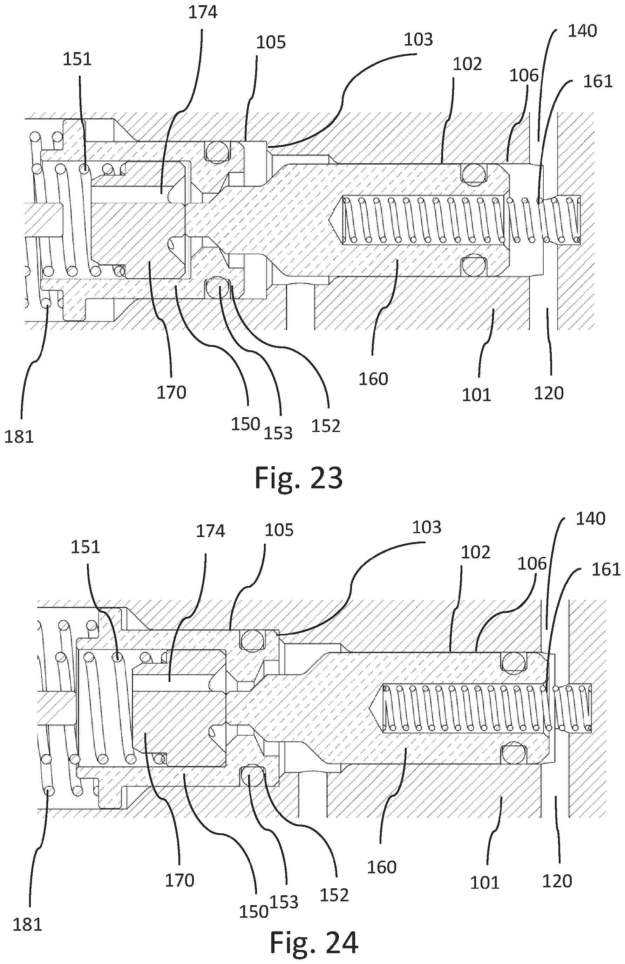

In den Figuren 23 bis 25 ist die Bremskraftverteilvorrichtung 100 mit einer Variante des Federtellers der Ausführung der Figuren 20 bis 22 versehen.

Wie in Figur 23 gezeigt, führt die Betätigung der Gebervorrichtung von Bremskreis A zu einem Druckaufbau in Bremskreis A. Der Kolben 160 wird nach links ausgelenkt, die Ventileinrichtung 185 wird geschlossen, Kolben 150 wird mitgenommen und baut so Druck am Auslass von Bremskreis B auf.

Wenn die Gebervorrichtung von Bremskreis A gelöst wird, wird, wie in Fig. 24 gezeigt, Druck in Bremskreis A abgebaut, und die Federeinrichtung 181 schiebt den Kolben 150 bis zum Anschlag 103 in dem Gehäuse 101. Die Federeinrichtung 151 schiebt den Federteller 170 bis zu seinem Anschlag an dem Kolben 150 nach rechts und nimmt Kolben 160 mit. Die Position des Kolbens 160 in seinem unbetätigtem Zustand wird über die Federkraft der Federeinrichtung 161 und seinem Anschlag zum Federteller 170 bestimmt.

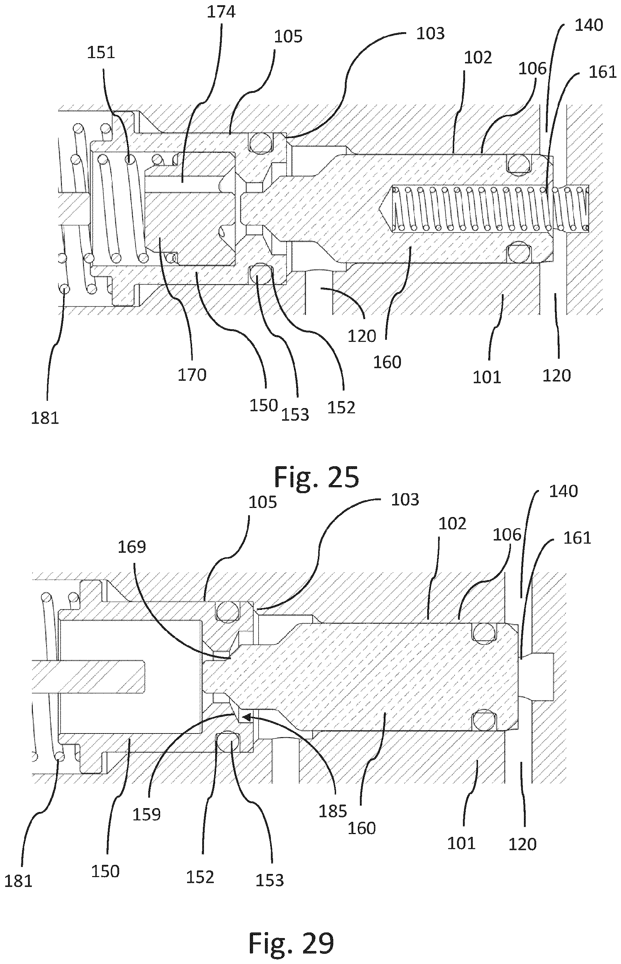

Wie in Fig. 25 gezeigt, führt die Betätigung der Gebervorrichtung von Bremskreis B zu einem Druckaufbau an dem Einlass 120 von Bremskreis B. Der Druck an Einlass 120 von Bremskreis B verschiebt Kolben 160 bis zu seinem Anschlag am Gehäuse 101 nach rechts, während der Kolben 150 in seiner Ausgangslage verbleibt. Sobald der Bremshebel von Bremskreis B losgelassen wird, schiebt die Federeinrichtung 161 den Kolben 160 bis auf seinen Anschlag zum Federteller 170 zurück in seine Ausgangsstellung.

Die Ausgangslagen der Kolben 150 und 160 sind bei dieser einzelnen Betätigung von Geber A oder Geber B und jeder folgenden einzelnen Betätigung von Geber A oder Geber B unabhängig davon, welche Reihenfolge der Betätigung der Gebervorrichtungen von Bremskreis A und B vorher erfolgt ist. Bei Betätigung beider Gebervorichtungen sorgt, abhängig von der Betätigungsreihenfolge, entweder die Gebervorichtung von Bremskreis A oder die Gebervorichtung von Bremskreis B dafür, dass der Rückzug an der Nehmervorrichtung von Bremskreis B überwunden wird und somit kann der Hebelweg der Gebervorrichtung leicht unterschiedlich sein. Auch das oben beschriebene Pumpen hat keinen Einfluss auf die Ausgangslagen der Kolben 150, 160. Daher sind die Hebelwege der Gebervorrichtungen der Bremskreise A und B gleichbleibend.

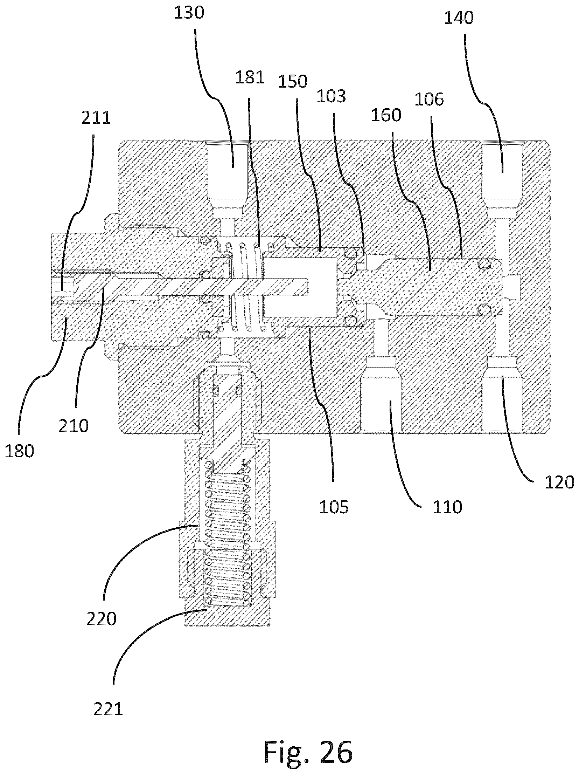

Die Figuren 26 bis 29 zeigen eine Ausführung einer erfindungsgemäßen Bremskraftverteilvorrichtung 100 ohne Federteller.

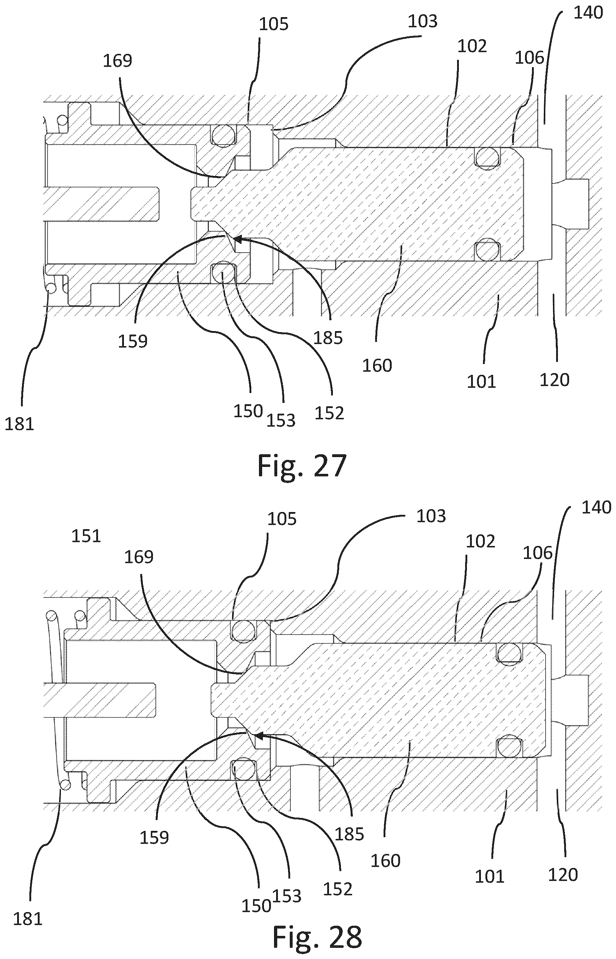

Wie in Fig. 27 gezeigt, führt eine Betätigung der Gebervorrichtung von Bremskreis A zu einem Druckaufbau in Bremskreis A. Druck liegt am Einlass 120 von Bremskreis A an. Der Kolben 160 wird nach links ausgelenkt, so dass die Ventileinrichtung 185 verschlossen wird. Der Kolben 150 wird mitgenommen und baut Druck am Auslass 130 von Bremskreis B auf.

Wird, wie in Fig. 28 gezeigt, die Gebervorrichtung von Bremskreis A gelöst, schiebt die Federeinrichtung 181 den Kolben 150 bis zum Anschlag 103 an dem Gehäuse 101 nach rechts. Der Kolben 160 wird über den Anschlag bei den Konusflächen 159, 169 der Ventileinrichtung 185 mitgenommen und im Wesentlichen gleichweit nach rechts verschoben.

Wie in Fig. 29 gezeigt, führt die Betätigung der Gebervorrichtung von Bremskreis B zu einem Druckaufbau am Einlass 110 von Bremskreis B. Der Druck verschiebt den Kolben 160 bis zu seinem Anschlag am Gehäuse 101 nach rechts und öffnet die Ventileinrichtung 185. Der Kolben 150 verbleibt in seiner Ausgangslage.

Bei der Ausführung der Figuren 26 bis 29 liegt der Kolben 160 je nach Betätigungsreihenfolge der Gebervorrichtung von Bremskreis A oder B im unbetätigten Zustand einmal auf der linken Seite oder auf der rechten Seite. Dadurch ergeben sich unterschiedliche Hebelwege für die Betätigung der Gebervorrichtungen von Bremskreis A und B, die von der Ausgangslage des Kolbens 160 abhängen. Allerdings erfolgt wie bei den Ausführungen der Figuren 17 bis 29 und 12 bis 16 keine Vergrößerung bzw. Veränderung beim Pumpen mit der Gebervorrichtung von Bremskreis A.

Die Ausführungen der Figuren 17 bis 29 weisen Druckbegrenzer 210 zur Begrenzung des Drucks auf, der in dem Bremskreis B über die Betätigung von Bremskreis A aufgebaut werden kann. Ebenso sind Druckminderer 220 vorgesehen, mit denen der Anteil von dem Druck in dem Bremskreis A eingestellt werden kann, der in dem Bremskreis B bei Betätigung von Bremskreis A aufgebaut werden kann.

Bei den Ausführungen der Figuren 20 bis 29 weist der Druckbegrenzer 210 eine Einstellvorrichtung 211 auf, bei der ein Werkzeugeingriff direkt in dem Gewindekopf einer Stange vorgesehen ist, die in einem Gewinde drehbar aufgenommen ist, das in dem Deckel 180 vorgesehen ist. Durch Verdrehen der Stange um ihre Achse verstellt sich der Druckbegrenzer derart, dass das Ende der Stange näher oder weiter weg zu dem Federteller 170 angeordnet wird. Der Abstand zwischen dem Ende der Stange, das dem Federteller 170 gegenüberliegt, und der Stirnfläche dem Federteller 170, die der Stange gegenüberliegt, bestimmt den maximalen Weg, den der Kolben 150 in dem Abschnitt 105 der Bohrung 102 zur Betätigung des Bremskreises B verschoben werden kann. Somit wird der maximale Druck in dem Bremskreis B begrenzt, der durch die Betätigung von Bremskreis A in Bremskreis B aufgebaut werden kann. Das komplette Einschrauben des Druckbegrenzers 210 bis dieser mit seiner Stirnfläche an Kolben 160 anschlägt, kann dafür genutzt werden Kolben 160 stets in seiner Ausgangslage zu halten, so dass die Ventileinrichtung 185 nicht geschlossen werden kann und somit das CBS deaktiviert werden kann. Es liegen dann zwei getrennte unabhängige Bremssysteme vor.

Mit dem Druckminderer 220 kann das Verhältnis des in dem Druckkreis B durch Betätigung des Bremskreises A aufgebauten Drucks zu dem Druck in dem Bremskreis A verändert werden. Der Druckminderer 220 weist eine Verstelleinrichtung 221 auf, mit der der Druckminderer 220 eingestellt werden kann. Bei Überschreiten des Grenzdrucks, wird der Kolben im Druckminderer 220 ausgelenkt. Der Hydraulikraum vergrößert sich. Um den Druck am Ausgang 130 des Bremskreises weiter zu steigern, bedarf es eines größeren Hebelwegs an der Gebervorrichtung von Bremskreis A und/oder der Gebervorrichtung des Bremskreises B, da mehr Fluidvolumen gefördert werden muss. Die vom Hebelweg abhängige Drucksteigerung ist somit gemindert.

Gemäß Ausführungen der Erfindung kann die Verstellung der Verstelleinrichtung 211 für den Druckbegrenzer 210 bzw. der Verstelleinrichtung 221 für den Druckminderer 220 bzw. des Verstellrads des Verstellers nicht nur per Hand oder mittels eines Werkzeugs erfolgen, sondern auch über Steuerbefehle eines (oder mehrerer) nicht dargestellten Steuergeräts, dass Fahrzeugzustandsdaten von Sensoren erhält und daraus geeignete Steuerdaten generiert.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

**Patentansprüche**

1. Bremskraftverteilvorrichtung (100) für ein Bremssystem, insbesondere eines lenkergeführten Fahrzeugs, insbesondere eines Fahrrads und weiter insbesondere eines Lastenfahrrads, mit einem ersten Bremskreis (A) und einem zweiten Bremskreis (B), wobei die Bremskraftverteilvorrichtung (100) ein Gehäuse (101) aufweist, in dem ein erster Einlass (120) für den ersten Bremskreis (A), ein erster Auslass (140) für den ersten Bremskreis (A), ein zweiter Einlass (110) für den zweiten Bremskreis (B), ein zweiter Auslass (130) für den zweiten Bremskreis (B) und eine Bohrung (102) vorgesehen ist, wobei in der Bohrung (102) ein erster Kolben (160) und ein zweiter Kolben (150) verschiebbar angeordnet sind,
**dadurch gekennzeichnet, dass** die Bremskraftverteilvorrichtung (100) eine Ventileinrichtung (185) aufweist, die derart angeordnet und eingerichtet ist, dass Ventileinrichtung (185) die hydraulische Verbindung zwischen dem zweiten Einlass (110) für den zweiten Bremskreis (B) und dem zweiten Auslass (130) für den zweiten Bremskreis (B) verschließt, wenn der Druck (p_A) an dem ersten Einlass (120) für den ersten Bremskreis (A) den Druck (p_B-IN) an dem zweiten Einlass (110) für den zweiten Bremskreis (B) übersteigt.

2. Bremskraftverteilvorrichtung (100) nach Anspruch 1,
**dadurch gekennzeichnet, dass** die Ventileinrichtung (185) derart angeordnet und eingerichtet ist, dass die Ventileinrichtung (185) die hydraulische Verbindung zwischen dem zweiten Einlass (110) für den zweiten Bremskreis (B) und dem zweiten Auslass (130) für den zweiten Bremskreis (B) öffnet, wenn der Druck (p_A) an dem ersten Einlass (110) für den ersten Bremskreis (B) von dem Druck (p_B-IN) an dem zweiten Einlass (110) für den zweiten Bremskreis (B) überstimmt wird.

3. Bremskraftverteilvorrichtung (100) nach einem der vorhergehenden Ansprüche, **dadurch gekennzeichnet, dass** der erste Kolben (160) einen Durchmesser (d1) aufweist, der kleiner als der Durchmesser (d2) des zweiten Kolbens (150) ist.

4. Bremskraftverteilvorrichtung (100) nach einem der vorhergehenden Ansprüche, **dadurch gekennzeichnet, dass** die Bremskraftverteilvorrichtung (100) derart angeordnet und ausgebildet ist, dass der erste Kolben (160) in Richtung des zweiten Kolbens (150) gedrückt wird, wenn der Druck (p_A) an dem ersten Einlass (110) für den ersten Bremskreis (B) den Druck (p_B-IN) an dem zweiten Einlass (110) für den zweiten Bremskreis (B) übersteigt.

5. Bremskraftverteilvorrichtung (100) nach einem vorhergehenden Ansprüche, **dadurch gekennzeichnet, dass** der erste Kolben (160) eine Stirnfläche (165) und der zweite Kolben (155) eine Stirnfläche (155) aufweist, die der Stirnfläche (165) des ersten Kolbens (150) gegenüberliegt, wobei die Ventilrichtung (185) bei den Stirnflächen (155, 165) angeordnet ist.

6. Bremskraftverteilvorrichtung (100) nach einem der vorhergehenden Ansprüche, **dadurch gekennzeichnet, dass** die Ventileinrichtung (185) eine Dichtungseinrichtung (167) aufweist, die zwischen dem ersten Kolben (160) und dem zweiten Kolben (150) angeordnet ist, und/oder **dadurch gekennzeichnet, dass** die Dichtungseinrichtung (167) in einer Nut (166) angeordnet ist, die an der Stirnfläche des ersten Kolbens (160) ausgebildet ist.

7. Bremskraftverteilvorrichtung (100) nach einem der vorhergehenden Ansprüche, **dadurch gekennzeichnet, dass** der zweite Kolben (155) einen Durchgang (157) aufweist, der von der Ventileinrichtung (185) verschließbar ist.

8. Bremskraftverteilvorrichtung (100) nach einem der vorhergehenden Ansprüche, **dadurch gekennzeichnet, dass** die Bremskraftverteilvorrichtung (100) eine Federeinrichtung (151, 181) aufweist, die den zweiten Kolben (150) in Richtung des ersten Kolbens (160) vorspannt, und/oder
**dadurch gekennzeichnet, dass** die Federeinrichtung (181) unmittelbar an dem zweiten Kolben (160) angreift.

9. Bremskraftverteilvorrichtung (100) nach einem der vorhergehenden Ansprüche, **dadurch gekennzeichnet, dass** die Bremskraftverteilvorrichtung (100) einen Versteller aufweist, der derart angeordnet und ausgebildet ist, dass mit dem Versteller die Federeinrichtung (151) einstellbar ist, die auf den zweiten Kolben (150) wirkt, und/oder

**dadurch gekennzeichnet, dass** die Bremskraftverteilvorrichtung (100) einen Federteller (170) aufweist, auf den die Federvorspannkraft der Federeinrichtung (151) wirkt, wobei vorzugsweise mit dem Versteller die Federvorspannkraft der Federeinrichtung (151) einstellbar ist, die auf den Federteller (170) wirkt, und/oder
**dadurch gekennzeichnet, dass** der Versteller eine Verstelleinrichtung aufweist, mit der der Versteller einstellbar ist.

10. Bremskraftverteilvorrichtung (100) nach einem der vorhergehenden Ansprüche, **dadurch gekennzeichnet, dass** die Bremskraftverteilvorrichtung (100) einen Druckbegrenzer (210) aufweist, der derart angeordnet und ausgebildet ist, dass mit dem Druckbegrenzer (210) die Federkraft der Federeinrichtung (151) einstellbar ist, die auf den zweiten Kolben (150) wirkt, und/oder
**dadurch gekennzeichnet, dass** der Druckbegrenzer (210) eine Verstelleinrichtung (211) aufweist, mit der der Druckbegrenzer (210) einstellbar ist.

11. Bremskraftverteilvorrichtung (100) nach einem der vorhergehenden Ansprüche, **dadurch gekennzeichnet, dass** die Bremskraftverteilvorrichtung (100) einen Druckbegrenzer (210) aufweist, der derart angeordnet und ausgebildet ist, dass mit dem Druckbegrenzer (210) die maximale Auslenkung des ersten Kolbens (160) und somit des zweiten Kolbens (150) begrenzt wird, und/oder

**dadurch gekennzeichnet, dass** die Bremskraftverteilvorrichtung (100) einen Druckbegrenzer (210) aufweist, der derart angeordnet und ausgebildet ist, dass mit dem Druckbegrenzer (210) die Auslenkung von dem ersten Kolben (160) und somit des zweiten Kolbens (150) unterbindbar ist.

12. Bremskraftverteilvorrichtung (100) nach einem der vorhergehenden Ansprüche, **dadurch gekennzeichnet, dass** die Bremskraftverteilvorrichtung (100) einen Druckminderer (220) aufweist, der derart angeordnet und ausgebildet ist, dass der Druck an dem Auslass (130) des zweiten Bremskreises (B) gemindert wird, wenn der Druck einen bestimmten Wert übersteigt, und/oder

**dadurch gekennzeichnet, dass** der Druckminderer (220) eine Verstelleinrichtung (221) aufweist, mit dem der Druckminderer (220) einstellbar ist.

13. Bremskraftverteilvorrichtung (100) nach einem der Ansprüche 9 bis 12, **dadurch gekennzeichnet, dass** die Bremskraftverteilvorrichtung (100) mit einem Steuergerät gekoppelt ist, in dem Fahrzustandsdaten gesammelt werden, die von Sensoren erfasst werden, und in dem Steuerdaten zur Verstellung der Verstelleinrichtung (211) des Druckbegrenzers (210) und/oder der Verstelleinrichtung (221) des Druckminderers (220) und/oder des Verstellrads des Verstellers in Abhängigkeit von den Fahrzustanddaten erzeugt werden.

14. Bremsssystem mit einer ersten Gebervorichtung, einer zweiten Gebervorrichtung, einem ersten Bremskreis und einem zweiten Bremskreis, wobei die erste Gebervorrichtung dem ersten Bremskreis zugeordnet ist, und die zweite Gebervorrichtung dem zweiten Bremskreis zugeordnet ist, und mit einer erfindungsgemäßen Bremskraftverteilvorrichtung nach einem der Ansprüche 1 bis 13.

15. Bremsystem nach Anspruch 14, wobei die erste Gebervorichtung und die zweite Gebervorrichtung derart angeordnet und ausgebildet sind, dass diese unabhängig voneinander betätigbar sind.

Fig. 1

Fig. 2

Schnüffelkanäle
geschlossen 110

Geber VR

120 Geber HR

180 160 163

Befüllen/
Entlüften

100

Nehmer VR

130 150 151 161 164 162 140

Nehmer HR

## Fig. 3

Schnüffelkanäle
geschlossen 110 Geber VR

Kolben wird
zurückgedrückt 120 Geber HR

180 163

Befüllen/
Entlüften

100

Nehmer VR

130 150 151 161 164 162 140

Nehmer HR

Ventil öffnet

## Fig. 4

Fig. 5

Fig. 6

190    p_B  110         120

B-IN        A-IN

180

B-OUT               A-OUT

130 p_B  170  150   160   140

## Fig. 7

p_A

190    185    110    120

B-IN        A-IN

180

B-OUT               A-OUT

130  170  150   160   140
p_B              p_A

## Fig. 8

Fig. 9

Fig. 10

p_B-IN     p_A

190     110     120

B-IN     A-IN

180

B-OUT     A-OUT

130   170  150    160   140

p_B-OUT

p_A

## Fig. 11

140     161

180     120

130

110

151  190  170 150  160

## Fig. 12

174    169    168                        120

151    170    150  153  152  159    160    110

Fig. 13

174    169    168                        120

151    170    150  153  152  159    160    110

Fig. 14

174   169   168   120
X

151   170   150   153   159   160   110
152

Fig. 15

174   169   168   120

151   170   150   153   159   160   110
152

Fig. 16

Fig. 17

Fig. 18

Fig. 19

Fig. 20

Fig. 21

Fig. 22

Fig. 23

Fig. 24

Fig. 26

Fig. 27

Fig. 28

Fig. 25

Fig. 29

Europäisches
Patentamt

European
Patent Office

Office européen
des brevets

**EUROPÄISCHER RECHERCHENBERICHT**

**Nummer der Anmeldung**

EP 24 18 3169

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 6 238 017 B1 (EITEL FREDERICK G [US]) 29. Mai 2001 (2001-05-29) * Zusammenfassung; Anspruch 1; Abbildung 1 * | 1-15 | INV. B60T8/26 B62L3/00 |
| | - - - - - | | |
| A | US 2005/067892 A9 (HEUBNER WILHELM [DE] ET AL) 31. März 2005 (2005-03-31) * Ansprüche 1,3; Abbildung 1 * * Absätze [0016] - [0018] * | 1-15 | |
| | - - - - - | | |

**RECHERCHIERTE SACHGEBIETE (IPC)**

B60T
B62M
B62L

Der vorliegende Recherchenbericht wurde für alle Patentansprüche erstellt

| Recherchenort | Abschlußdatum der Recherche | Prüfer |
|---|---|---|
| München | 9. Oktober 2024 | Gaillard, Alain |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

....................................................................................................
& : Mitglied der gleichen Patentfamilie, übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 18 3169

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2024

| Im Recherchenbericht angeführtes Patentdokument | Datum der Veröffentlichung | Mitglied(er) der Patentfamilie | | Datum der Veröffentlichung |
|---|---|---|---|---|
| US 6238017 B1 | 29-05-2001 | KEINE | | |
| US 2005067892 A9 | 31-03-2005 | AT | E266548 T1 | 15-05-2004 |
| | | AU | 8773301 A | 26-03-2002 |
| | | EP | 1318933 A1 | 18-06-2003 |
| | | JP | 2004509006 A | 25-03-2004 |
| | | US | 2004046444 A1 | 11-03-2004 |
| | | WO | 0222417 A1 | 21-03-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4458953 A
- DE 2849806 C3